# EUROPÄISCHE PATENTSCHRIFT

(11) **EP 4 365 112 B1**
(45) Veröffentlichungstag und Bekanntmachung des Hinweises auf die Patenterteilung: **27.05.2026**
(21) Anmeldenummer: 23205743.0
(22) Anmeldetag: 25.10.2023
(51) Int. Cl.: B65G 1/04, B65G 7/00

(54) **LAGEREINRICHTUNG FÜR WERKSTOFFPLATTEN**
STORAGE DEVICE FOR MATERIAL BOARDS
DISPOSITIF DE STOCKAGE POUR PLAQUES DE MATÉRIAU

(30) Priorität: 27.10.2022 DE 102022004022; 27.10.2022 DE 202022002880 U; 11.10.2023 DE 102023127773
(43) Veröffentlichungstag der Anmeldung: 08.05.2024
(73) Patentinhaber: Siempelkamp Transport Systems GmbH, 33758 Schloss Holte-Stukenbrock (DE)
(72) Erfinder: REMPEL, Juri, 33415 Verl (DE); SCHARTNER, Tobias, 33378 Rheda-Wiedenbrück (DE)
(74) Vertreter: Ter Meer Steinmeister & Partner

(56) Entgegenhaltungen:
- WO-A2-2021/240011
- DE-A1- 102017 001 349
- US-A1- 2022 178 084
- STROTHMANN MACHINES AND HANDLING: "UTrack - The new ultra class for Automated Guided Vehicles", HTTPS://STROTHMANN.COM, 28 August 2022 (2022-08-28), pages 1 - 7, XP093140801, Retrieved from the Internet <URL:https://strothmann.com/assets/files/strothmann-utrack-052022-e.pdf> [retrieved on 20240313]
- STROTHMANN MACHINES AND HANDLING: "CustomTrack - Das kundenindividuelle ?Transportsystem", STROTHMANN.COM, 11 August 2022 (2022-08-11), pages 1 - 22, XP093141512, Retrieved from the Internet <URL:https://web.archive.org/web/20220811204230/https://strothmann.com/systeme/rundschienen-systeme/manuelle-transportsysteme/customtrack/> [retrieved on 20240314]

## Beschreibung

Die Erfindung betrifft eine Lagereinrichtung für Werkstoffplatten mit
a) wenigstens einem schienengebundenen Basisfahrweg mit mindestens einem Schienenpaar und mindestens einem zu Plattenablegestellen führenden schienengebundenen Transferweg mit mindestens zwei Schienenpaaren, wobei das Schienenpaar des Basisfahrwegs und die Schienenpaare des Transferwegs im Wesentlichen rechtwinklig aufeinandertreffen,
b) wenigstens einer Transporteinrichtung bestehend aus zwei Trägerfahrzeugen mit eigenem Antrieb, die beim Transport auf gleichbleibenden Abstand zueinander synchronisierbar sind und die in der Lage sind, gemeinsam die zu transportierenden Werkstoffplatten aufzunehmen, und
c) jeweils einer an beiden Trägerfahrzeugen vorhandenen ebenfalls synchronisierbaren Hubvorrichtung, mittels derer Werkstoffplatten aufnehmbar und auf den Plattenablegestellen in der Lagereinrichtung ablegbar sind.

Zur Definition der verwendeten Begriffe sei näher erläutert:
- eine Lagereinrichtung beschreibt die ganze Anlage und Fläche zur Aufnahme und Ablage von Werkstoffplatten oder Werkstoffplattenstapeln mittels wenigstens einer Transporteinrichtung und verschiedenen Plattenablegestellen, die in der Regel auf einer definierten Höhe angeordnet sind,
- ein schienengebundener Transferweg ist der Schienenweg, der durch die Lagerreihen unmittelbar an den Plattenablegestellen vorbeiführt,
- ein schienengebundener Basisfahrweg ist ein in der Regel rechtwinklig zum Transferweg verlaufender Schienenweg, der entfernt von der Plattenablegestellen durch das Lager oder seitlich daran vorbeiführt,
- bei den hier angesprochenen Schienen(paaren) handelt es sich in erster Linie, aber nicht einschränkend, um die von der Anmelderin vertriebenen Schienen gemäß der DE 4318383 C1 oder der WO 2014/032699 A1. Diese Art von sogenannten Rundschienen hat sich in der Praxis bestens bewährt, weil sie einfach aufgebaut und somit leicht herstellbar sind. Ein Vorteil für Fabrikationshallen besteht darin, dass die Schiene nahezu bündig mit dem Fußboden verlegt werden kann, so dass andere Fahrzeuge in ihrer Bewegungsfreiheit nicht eingeschränkt sind. Im Gegensatz zu rinnenförmigen Schienen, in denen die Räder der Flurförderer laufen, ist die Verschmutzungsgefahr der Schienen deutlich verringert,
- die Trägerfahrzeuge besitzen dann entsprechend konkav ausgekehlte Räder im Bereich des Umfangs, so dass die Schienen mit einem konvexen Oberflächenabschnitt bei Kontakt zumindest teilweise in den ausgekehlten Bereich der Räder eintauchen.
- Unter Schienenpaar werden in der Regel zwei parallele Schienen verstanden. Falls die Trägerfahrzeuge eine gewisse Breite überschreiten, kann allerdings zur Abstützung eine dritte, ggf. auch vierte Schiene parallel verlegt werden müssen, um die Trägerfahrzeuge zu tragen. Diese Anordnung soll in äquivalenter Weise unter dem Begriff Schienenpaar subsummiert sein. In diesem Fall sind für eine Fahrtrichtung mindestens sechs, ggf. auch mindestens acht Räder bzw. Radkassetten notwendig.
- die Plattenablegestellen sind bevorzugt lange parallele Trägerreihen, auf denen einzelne Werkstoffplatten oder Werkstoffplattenstapel in der Regel auf einer definierten Höhe abgelegt werden können, wobei die Trägerfahrzeuge auf dem Transferweg zwischen der Plattenablegestellen hindurchfahren und die durch Hubvorrichtung angehobenen Werkstoffplatten an gewünschter Plattenablegestelle ablassen können.

Derartige Lagereinrichtungen für Werkstoffplatten, wie beispielsweise Span-, OSB- oder Dämmplatten, die entsprechend eine Oberfläche von mehr als 1,5 m² aufweisen, sind bereits bekannt. Tatsächlich sind sie überall ähnlich aufgebaut. Auf dem Basisfahrweg verfährt dabei ein großer Basiswagen, der in der Regel zwei Satellitenfahrzeuge trägt. Diese zwei Satellitenfahrzeuge tragen als Trägerfahrzeuge wiederum Werkstoffplattenstapel und können das Basisfahrzeug auf rechtwinklig zum Basisfahrweg angeordneten Transferwegen mit eigenen Antrieben verlassen. Im Stand der Technik besteht eine Transporteinrichtung demnach im Wesentlichen aus einem Basisfahrzeug und zwei Satelliten- oder Trägerfahrzeugen. Die heute übliche Lagereinheit besteht aus drei parallelen Plattenablegestellen. In die beiden Zwischenräume können sich die beiden Satellitenfahrzeuge bewegen, während sie gemeinsam Werkstoffplatten tragen. Dabei werden die Werkstoffplatten über Hubvorrichtungen angehoben, um oberhalb der Plattenablegestelle verfahren werden zu können. An geeigneter Stelle werden die Werkstoffplatten dann abgesenkt und auf den drei Plattenablegestellen abgelegt. Es gibt zahlreiche Patentanmeldungen, die diese Situation und den damit verbundenen Stand der Technik beschreiben. Es seien hier die WO 2021/240009 A1, die WO 2021/240010 A2 und die WO 2021/240011 A2 genannt , die jeweils den Oberbegriff des Anspruchs 1 offenbaren. Weiterhin sei auch die zum Zeitpunkt der Anmeldung noch nicht veröffentlichte DE102022000571.9 genannt.

Bei allen Schriften geht es um wenigstens ein auf Schienen verfahrbares Basisfahrzeug sowie mehrere zu Plattenablegestellen führenden Transferwege und wenigstens einem darauf verfahrbaren Satellitenfahrzeug, welches in der Lage ist, mindestens eine Werkstoffplatte zu bewegen, wobei für wenigstens ein Satellitenfahrzeug ein Ruheplatz auf dem Basisfahrzeug vorhanden ist, wobei das Basisfahrzeug eine elektrische Stromversorgung, beispielsweise über einen Schleifkontakt, und einen Antrieb mit einem Basisfahrzeug-Elektromotor aufweist und wobei das Satellitenfahrzeug ebenfalls einen Antrieb mit einem Satellitenfahrzeugmotor aufweist.

Es gibt verschiedene Ansätze, die "Huckepack-Satelliten" mit Energie derart zu versorgen, damit sie sich auch unabhängig vom Basisfahrzeug bewegen und ihre Hubvorrichtungen betreiben können. Bislang sind diese alle noch nicht wirklich zufriedenstellend. Schleifkontakte sind anfällig, Kabel sind hinderlich und Ladestationen für Akkus aufwändig. Insbesondere aber sind die Steuerungen von Basiswagen im Zusammenspiel mit den Satellitenfahrzeugen vielfach nicht leicht umzusetzen, da Funk- und WLAN-Übertragungen in den Lagern oft beeinträchtigt sind.

Ferner sind die Satellitenfahrzeuge darauf angewiesen, vom Basisfahrzeug aufgenommen zu werden, um über den Basisfahrweg zu einem anderen Transferweg zu gelangen.

Das Dokument "UTrack - The new ultra class for Automated Guided Vehicles", https://strothmann.com, 28. August 2022 (2022-08-28), Seiten 1-7, XP093140801, URL:https://strothmann.com/assets/files/strothmann- utrack-052022-e.pdf, beschreibt eine Verwendung von zwei hintereinander und zueinander synchronisierten Trägerfahrzeugen zum Bewegen einer Last entlang einer Fertigungslinie.

Das Dokument "CustomTrack - Das kundenindividuelle Transportsystem", strothmann.com, 1. August 2022 (2022-08-11), Seiten 1-22, XP093141512, URL:https://web.archive.org/web/20220811204230/https://strothmann.com/systeme/r undschienen-systeme/manuelle-transportsysteme/customtrack/, beschreibt eine manuelle Lösung zum Befördern von schweren Lasten.

Aufgabe der Erfindung ist es, eine Lagereinrichtung für Werkstoffplatten zu entwickeln, bei dem die beschriebenen Probleme hinsichtlich der Basiswagen-Satellitenwagen-Steuerung vermieden werden kann.

Die Aufgabe wird gemäß den Merkmalen des Anspruchs 1 und insbesondere dadurch gelöst, dass die Transporteinrichtung durch eine Räderausrichtungseinrichtung sowohl auf dem Basisfahrweg als auch auf dem Transferweg verfahrbar ist, und zwar dergestalt, dass die Trägerfahrzeuge auf dem Basisfahrweg in gleichbleibendem Abstand hintereinander und auf den Transferwegen in gleichförmigen Abstand auf gleicher Höhe parallel nebeneinander verfahrbar sind. Während des Transports sollten die Abstände, die im weiteren Verlauf mit A1 (auf dem Basisfahrweg) und A2 (auf dem Transferweg) bezeichnet sind, gleich sein.

Mit der Räderausrichteinrichtung können die aktiven Räder, also diejenigen, die die Transporteinrichtung gerade auf Schienen verfahren, entweder in die Schienenrichtung des Basisfahrwegs oder aber in Richtung des etwa rechtwinklig abzweigenden Transferweges ausgerichtet sein. Dabei muss es sich nicht zwingend um einzelne Räder handeln. Vielfach sind auch zwei oder mehr Räder in einer sogenannten Kassette hintereinander gelagert. In diesem Fall wird die Kassette gegebenenfalls um eine senkrechte Achse um 90° gedreht. Wenn im weiteren Verlauf von einer Drehung der Räder gesprochen wird, so ist die Drehung einer Kassette mit erfasst. Aber es kann sich auch um unterschiedliche Radsätze handeln, die auf den Schienen des Basisfahrwegs oder den Schienen des Transferwegs abrollen.

Die erfindungsgemäße Lösung ist gegenüber herkömmlichen Lösungen mit Basisfahrzeug und Satellitenfahrzeugen um ein Vielfaches flexibler, da die Transporteinrichtung sowohl die sogenannte Quer- als auch die Längsfahrt, also auf dem Basisfahrweg und dem Transferweg erlauben und durchführen. Gleichzeitig können sich mehrere Transporteinrichtungen in dem Basisfahrweg und dem Transferweg befinden, ohne sich gegenseitig zu behindern oder voneinander abhängig zu sein.

Denkbar ist sogar, dass sich auf dem Basisfahrweg entgegenkommende Transporteinrichtungen gegenseitig ausweichen, indem eine der Transporteinrichtungen auf einen Transferweg einfährt, um die entgegenkommende andere Transporteinrichtung passieren zu lassen.

Um diese Varianten zügig durchführen zu können, ist es bevorzugt, wenn der gleichbleibende Abstand der beiden Trägerfahrzeuge auf dem Basisfahrweg sich mit dem Abstand der wenigstens zwei Transferschienenpaare derart deckt, dass nach Aktivierung der Räderausrichtungseinrichtung die aktiven Räder auf den Transferschienen aufsetzbar sind.

Bei einer exakten Abstandssychronisierung auf dem Basisfahrweg kommen die wenigstens zwei Trägerfahrzeuge automatisch im richtigen Abstand auch an den kreuzenden Transferwegen an. Sobald die Räderausrichtungseinrichtung aktiviert wurde und die Räder der Trägerfahrzeuge von der Basisfahrwegrichtung in die Transferwegrichtung umgeschaltet wurden können die Trägerfahrzeuge parallel quasi rechts oder links abbiegen und auf den Transferschienen weiterfahren. Besonders wichtig ist dabei zu betonen, dass die zu transportierenden Werkstoffplatten dabei ihre Lage auf den beiden Trägerfahrzeugen beibehalten und relativ zu der gesamten Transporteinrichtung nicht bewegt oder verschoben werden.

Mit Vorteil ist dafür gesorgt, dass die Räderausrichtungseinrichtung mit den Fahrwerkskomponenten der Trägerfahrzeuge verbunden ist.

So können an jedem Trägerfahrzeug direkt am Fahrwerk Mittel vorgesehen sein, die eine Ausrichtung der aktiven Räder von der Basisfahrwegrichtung in die Transferwegrichtung ändern.

Es gibt drei alternative bevorzugte Möglichkeiten für eine wirksame Räderausrichtungseinrichtung, die in den Unteransprüchen 4 bis 6 kurz benannt sind.

Als erste Möglichkeit ist es vorteilhaft, wenn im Kreuzungsbereich der Schienen jeweils ein drehbarer Teller auf Schienenhöhe vorgesehen ist und die Räder der beiden Trägerfahrzeuge um eine senkrechte Achse drehbar gelagert sind.

Dann kann durch eine Drehung eines Tellers ein darauf stehendes Rad ebenfalls gedreht werden, um die Fahrtrichtung des Trägerfahrzeugs zu ändern. Dabei ist es unerheblich, ob der Drehantrieb an dem Rad oder an dem Teller vorgesehen ist. Bei ausreichendem Gewicht und ausreichender Reibung benötigt der Teller nicht einmal eine Schiene oder eine Nut für das Rad, sondern kann eine vollkommen glatte Oberfläche haben. Unter Rädern seien hier - wie gesagt - auch Kassetten mit zwei oder drei Rädern verstanden, solange sie auf einem Drehteller Platz finden.

Bei dieser Anordnung ist es zwingend erforderlich, dass alle Räder beider Trägerfahrzeuge auf Drehtellern stehen müssen, damit die Transporteinrichtung von einer Fahrtrichtung in einen andere wechseln kann. Aus diesem Grund ist der gleichbleibende Abstand der beiden Trägerfahrzeuge auf dem Basisfahrweg unbedingt einzuhalten.

Als zweite Möglichkeit, eine wirksame Räderausrichtungseinrichtung zu schaffen, ist es vorteilhaft, wenn die Räder der Trägerfahrzeuge um eine senkrechte Achse motorisch drehbar gelagert sind und sie durch wenigstens einen Druckstempel, der geeignet ist, das Trägerfahrzeug anzuheben, zumindest kurzzeitig entlastbar sind, bis die Räder um etwa 90° gedreht sind. Der Druckstempel kann beispielsweise einen Aktuator umfassen.

Ein solcher Druckstempel ermöglicht es, jedes Rad bzw. jede Kassette derart zu entlasten, dass diese mit geringem Kraftaufwand relativ zum Trägerfahrzeug drehbar ist. Der Druckstempel wirkt dabei gegen einen Bereich der Schienenkreuzung und entlastet durch Ausübung eines Gegendrucks die Räder, so dass diese nicht mehr die Last Trägerfahrzeugs und der zu transportierenden Werkstoffplatten tragen. Diese Last wird vielmehr nun vom Druckstempel übernommen. Dies ermöglicht eine Integration aller zur Richtungsänderung notwendigen Komponenten im Flurförderelement und vereinfacht dementsprechend deren Steuerung sowie die Konstruktion des Schienensystems.

Durch die Anhebung der Räder und des Trägerfahrzeugs von der Schiene ragt das zur Schiene gerichtete Ende des Druckstempels nach unten über die Lauffläche des mindestens einen Rades hinaus, so dass kein Teil des Rades in Kontakt mit einem Teil des Schienensystems steht. Dies ermöglicht es, die Räder bzw. Kassette frei und ohne Widerstand relativ zum Trägerfahrzeug zu drehen.

Als dritte Möglichkeit, eine Räderausrichtungseinrichtung zu schaffen, ist es vorteilhaft, dass eine Hubeinrichtung vorhanden ist, die geeignet ist, die Räder der Trägerfahrzeuge, die auf den Schienen des Basisfahrwegs stehen, anzuheben, während sie andere Räder auf die Schienen des Transferwegs absenkt oder umgekehrt.

Diese dritte Möglichkeit wird in der späteren Beschreibung der Ausführungsbeispiele näher erläutert, weil sie bereits im Versuchsfeld erprobt ist.

In dieser Ausführung besitzt das Fahrwerk also zwei Sätze von Rädern. Der erste Satz ist in Richtung des Basisfahrwegs ausgerichtet, der zweite in Richtung des Transferweges. Alle Räder sind mit wenigstens einer Hubeinrichtung gekoppelt, wobei einer der Sätze in Kontakt mit Schienen steht, während der andere Satz von den Schienen abgehoben ist. Der Wechsel der Sätze, die Kontakt mit den Schienen haben, erfolgt im Kreuzungsbereich von Basisfahrweg und Transferweg. Auch hier müssen diese Vorgänge für beide Trägerfahrzeuge synchronisiert durchführbar sein.

Bei dieser dritten Ausführung ist es besonders bevorzugt, wenn ein erstes Fahrwerk mit den Rädern für die Schienen des Basisfahrwegs und ein zweites Fahrwerk mit den Rädern für die Schienen des Transferwegs zueinander durch die Hubeinrichtung verschiebbar sind.

Die Hubeinrichtung kann das erste Fahrwerk absenken, während es das zweite Fahrwerk anhebt, oder genau umgekehrt. Dadurch kommen entweder die Räder des ersten Fahrwerks oder die Räder des zweiten Fahrwerks in Eingriff bzw. Kontakt mit den zugeordneten Schienen.

Eine besonders effektive und vorteilhafte Ausgestaltung liegt dann vor, wenn das erste Fahrwerk dem zweiten übergestülpt ist. Eine Hubeinrichtung zwischen diesen Fahrwerken erlaubt es dann, das erste Fahrwerk so weit abzulassen, dass dessen Räder auf Schienen aufsetzen. Gleichzeitig oder danach kann das zweite Fahrwerk mit seinen Rädern von deren Schienen abgehoben werden. Analog kann bei Richtungswechsel der umgekehrte Vorgang ebenfalls stattfinden.

In einer konstruktiv bevorzugten Ausgestaltung ist das erste Fahrwerk als nach unten offener Quader ausgebildet, also mit vier Seitenwänden und einer Deckfläche. Obenauf wird die Deckfläche zur Tragfläche für die Werkstoffplatten. An den unteren Kanten des Quaders sind wenigstens vier Räder angebracht, die beispielsweise auf den Schienen des Basisfahrwegs laufen. Von unten in die Öffnung des ersten Fahrwerks wird das zweite Fahrwerk eingebracht, das ebenfalls mindestens vier Räder aufweist, die beispielsweise auf die Schienen des Transferwegs aufsetzen können. Die Hubvorrichtung zwischen den beiden Fahrwerken sorgt dafür, dass die Fahrtrichtung gewechselt werden kann, indem entweder das erste oder das zweite Fahrwerk auf den zugeordneten Schienen steht.

So ist mit ganz besonderem Vorteil ist dafür gesorgt, dass sowohl die Hubvorrichtung als auch die Hubeinrichtung die gleichen Aktuatoren umfassen.

Man beachte an dieser Stelle noch einmal die genutzte Terminologie, wonach eine Hubvorrichtung zum Anheben und Absenken der zu transportierenden Werkstoffplatten dient, während eine Hubeinrichtung die aktiven Räder auf den Schienen des Basisfahrwegs oder denen des Transferweges bestimmen.

Wenn in diesem Fall die Tragfläche des Trägerfahrzeugs fest mit dem ersten Fahrwerk verbunden ist, so sind für die Hubvorrichtung und die Hubeinrichtung die gleichen, vorzugsweise sogar dieselben Aktuatoren einsetzbar. Wird beispielsweise das erste Fahrwerk (vorzugsweise das dem zweiten Fahrwerk übergestülpte) mit der Tragfläche abgesenkt, so dass die Räder Kontakt mit den Schienen haben, so sind auch die Werkstoffplatten mit ihrer Unterkante in der niedrigstmöglichen Transportposition. Dieser Zustand ist für den Transport auf dem Basisfahrweg aber sehr gut geeignet. Wird dann, um auf den Transferweg zu wechseln, das erste Fahrwerk angehoben und das zweite abgesenkt, so haben die Werkstoffplatten mit ihrer Unterkante eine etwas höhere Position, was der Ablage auf den Plattenablegestellen positiv zugutekommt. Somit ergibt sich ein entsprechender Vorteil, wenn wenigstens eine Höhenposition mit abgesenkten und somit in Kontakt befindlichen Rädern auf den Schienen des Basisfahrwegs und wenigstens eine andere Höhenposition mit abgesenkten und somit in Kontakt befindlichen Rädern auf den Schienen des Transferwegs gekoppelt ist.

Vorteilhaft ist es allerdings auch, wenn jede Hubvorrichtung geeignet ist, mehrere Höhenpositionen für die Tragfläche des Trägerfahrzeugs und somit die Unterkante der zu transportierenden Werkstoffplatten anzufahren.

Auf diese Weise ist es besonders einfach möglich, die Werkstoffplatten oberhalb der Plattenablegestellen in ihre Lagerposition zu fahren und sie dann durch Absenken der Hubvorrichtung in eine zweite tiefergelegene Höhenposition, in der die Unterkante der Werkstoffplatte theoretisch unterhalb der Plattenablegestelle läge, auf der Plattenablegestelle abzusetzen.

Bevorzugt ist hierbei eine Höhenposition mit abgesenkten und somit in Kontakt befindlichen Rädern auf den Schienen des Basisfahrwegs und wenigstens eine andere Höhenposition mit abgesenkten und somit in Kontakt befindlichen Rädern auf den Schienen des Transferwegs gekoppelt.

Somit ist bevorzugt, dass wenigstens zwei Höhenpositionen für die Tragfläche des Trägerfahrzeugs beim Transport auf dem Transferweg einstellbar sind, eine bei der die Tragfläche und somit die Unterkante der zu transportierenden Werkstoffplatten oberhalb und einer bei der die Unterkante der zu transportierenden Werkstoffplatten unterhalb der Plattenablegestelle in der Lagereinrichtung liegt.

Das bevorzugte Mittel zur Energieversorgung der Trägerfahrzeuge sind Induktionsschleifen, die ein Magnetfeld erzeugen und beispielsweise parallel der Schienen im Hallenboden untergebracht sind. Die Fahrzeuge besitzen entsprechend eine Empfängereinheit in Form wenigstens einer weiteren Spule, die vom erzeugten Magnetfeld durchflossen wird. Der erzeugte Strom wird vorzugsweise in Akkumulatoren oder Stromspeichern auf den Trägerfahrzeugen gespeichert. Hierzu sollen in dieser Erfindung per Definition beispielsweise auch Kondensatoren gehören. So ist immer genug Energie vorhanden für die Fahrantriebe, die Hubvorrichtung und die Hubeinrichtung. Dabei können die Hubvorrichtung und die Hubeinrichtung beispielsweise hydraulisch über elektrisch betriebene Pumpen oder direkt über elektrische Spindelantriebe arbeiten.

Für eine effiziente Aufladung der Akkumulatoren können auch separate Ladestationen oder Ladestellen vorgesehen sein.

Diese bevorzugte Energieschaltung muss aber nicht zwingend vorhanden sein, wenn das Grundprinzip der Erfindung erfüllt ist. So soll beispielsweise auch eine herkömmliche Stromversorgung, beispielsweise über Kabel mit Wickeltrommeln, von der Erfindung erfasst sein. Bevorzugt sind die Trägerfahrzeuge zumindest im unbeladenen Zustand mechanisch voneinander entkoppelt. Dies bedeutet, dass keine konstruktive Verbindung zwischen den Trägerfahrzeugen vorgesehen ist. Eine synchrone Bewegung der Trägerfahrzeuge in gleichbleibendem Abstand hintereinander oder nebeneinander wird in diesem Fall nicht durch mechanische bzw. konstruktive Kopplungsmittel erreicht, die die Funktion einer festen Deichsel erfüllen, sondern auf andere Weise, etwa durch eine geeignete synchrone Steuerung der jeweiligen Fahrbewegungen, so dass beide Trägerfahrzeuge sich wie ein einziges Fahrzeug verhalten. Eine transportierte Werkstoffplatte wird dann während der Fahrt gegenüber keinem der Trägerfahrzeuge verschoben.

Die Begriffe "Kopplung" und "Entkopplung" beziehen sich hier auf die Trägerfahrzeuge selbst und auf deren Bewegung. Eine gemeinsame Last, die von beiden Fahrzeugen getragen wird, wie z.B. die genannte Werkstoffplatte, ist daher nicht als Kopplungsmittel zu verstehen, selbst dann nicht, wenn diese rutschfest auf den Trägerfahrzeugen aufliegen sollte. Vielmehr sorgt eine mechanische Entkopplung dafür, dass die Trägerfahrzeuge sich zumindest im unbeladenen Zustand unabhängig voneinander auf dem Basisweg und auf dem Transferweg bewegen können (vorbehaltlich der oben beschriebenen Synchronisierung durch eine gemeinsame Steuerung). Es ist zudem keine Kopplung von zwei Trägerfahrzeugen durch ein gemeinsames Basisfahrzeug vorgesehen, auf dem die Trägerfahrzeuge mit gleichbleibendem Abstand transportiert werden. Dieses Basisfahrzeug wäre schließlich Teil der gesamten Transporteinrichtung. Tatsächlich werden die zu transportierenden Werkstoffplatten relativ zu der gesamten Transporteinrichtung nicht bewegt, weil die gesamte Transporteinrichtung eben nur aus den Trägerfahrzeugen besteht. Die Schienenwege, auf denen die Trägerfahrzeuge ruhen, stellen in diesem Zusammenhang ebenfalls keine Kopplungsmittel dar, da die jeweiligen Trägerfahrzeuge grundsätzlich frei auf diesen verfahrbar sind.

Vorzugsweise umfasst die erfindungsgemäße Lagereinrichtung eine Steuerung zur Abstandswahrung von zwei Trägerfahrzeugen, um die Abstände der beiden Trägerfahrzeuge auf dem Basisfahrweg in gleichbleibendem Abstand hintereinander und auf den Transferwegen in gleichförmigem Abstand auf gleicher Höhe parallel nebeneinander zu gewährleisten. Es ist von Vorteil, wenn eine Steuerung die Ist-Daten des Trägerfahrzeugs über Drehgeber an wenigstens einem der Räder erhält.

Durch diese genaue aktuelle Standortbestimmung ist eine Regelung der Antriebe der Trägerfahrzeuge möglich.

Insbesondere an den Kreuzungsstellen der Schienen des Basisfahrwegs und der Schienen des Transferwegs kann es zusätzlich nützlich sein, die exakte Position der Räder über Transponder zu erfassen. Ein Aufsetzen bzw. Drehen der Räder um eine vertikale Achse beim Wechsel der Fahrtrichtung auf einer Schienenkreuzung kann dadurch sichergestellt werden.

Bevorzugt sind wenigstens zwei parallele Basisfahrwege in der Lagereinrichtung vorhanden. Das erlaubt den unkomplizierten Einsatz von mehreren Transporteinrichtungen, bestehend aus zwei Trägerfahrzeugen. Bei zwei sich entgegenkommenden Transporteinrichtungen kann eine bequem über einen Transferweg auf den zweiten Basisfahrweg ausweichen. Im Übrigen erlauben zwei Basisfahrwege das Herannahen der Transporteinrichtung zu den Plattenablegestellen von zwei Seiten, was auch die Aufnahme und die Abgabe der Werkstoffplatten in die Lagereinrichtung erheblich erleichtert.

Die Trägerfahrzeuge können identisch ausgebildet sein. Damit können die Trägerfahrzeuge den gleichen technischen Aufbau aufweisen und auf gleiche Weise angesteuert und betrieben werden.

Die Erfindung umfasst ferner ein Verfahren zum Betrieb einer Lagereinrichtung für Werkstoffplatten, welche Lagereinrichtung folgendes umfasst:
a) wenigstens einen schienengebundenen Basisfahrweg mit mindestens einem Schienenpaar und mindestens einem zu Plattenablegestellen führenden schienengebundenen Transferweg mit mindestens zwei Schienenpaaren, wobei das Schienenpaar des Basisfahrwegs und die Schienenpaare des Transferwegs im Wesentlichen rechtwinklig aufeinandertreffen,
b) wenigstens eine Transporteinrichtung, bestehend aus zwei Trägerfahrzeugen mit eigenem Antrieb, die beim Transport auf gleichbleibenden Abstand zueinander synchronisierbar sind und die in der Lage sind, gemeinsam die zu transportierenden Werkstoffplatten aufzunehmen, und
c) jeweils eine an beiden Trägerfahrzeugen vorhandene ebenfalls synchronisierbare Hubvorrichtung, mittels derer Werkstoffplatten aufnehmbar und auf den Plattenablegestellen in der Lagereinrichtung ablegbar sind,
wobei die Transporteinrichtung durch eine Räderausrichtungseinrichtung sowohl auf dem Basisfahrweg als auch auf dem Transferweg verfahren wird, und zwar dergestalt, dass die Trägerfahrzeuge auf dem Basisfahrweg in gleichbleibendem Abstand hintereinander und auf den Transferwegen in gleichförmigen Abstand auf gleicher Höhe parallel nebeneinander verfahren werden, wobei die zu transportierenden Werkstoffplatten dabei ihre Lage auf den beiden Trägerfahrzeugen beibehalten und relativ zu der gesamten Transporteinrichtung nicht bewegt oder verschoben werden.

Bevorzugt deckt der gleichbleibende Abstand der beiden Trägerfahrzeuge auf dem Basisfahrweg sich mit dem Abstand der wenigstens zwei Schienenpaare auf dem Transferweg derart, dass nach Aktivierung der Räderausrichtungseinrichtung die aktiven Räder auf den Transferschienen verfahrbar sind.

Vorzugsweise ist die Räderausrichtungseinrichtung mit den Fahrwerkskomponenten der Trägerfahrzeuge verbunden.

Gemäß einer bevorzugten Ausführungsform werden die Räder der Trägerfahrzeuge zum Wechsel der Fahrtrichtung um eine senkrechte Achse gedreht.

Diese Drehung der Räder findet vorzugsweise statt, während diese auf drehbaren Tellern im Kreuzungsbereich der Schienen ruhen.

Gemäß einer weiteren bevorzugten Ausführungsform sind die Räder der Trägerfahrzeuge um eine senkrechte Achse motorisch drehbar gelagert und werden während der Drehung durch wenigstens einen Druckstempel, der das Trägerfahrzeug anhebt, zumindest kurzzeitig entlastet, bis sie um etwa 90° gedreht sind.

Gemäß einer weiteren bevorzugten Ausführungsform hebt zum Wechsel der Fahrtrichtung eine Hubeinrichtung die Räder der Trägerfahrzeuge, die auf den Schienen des Basisfahrwegs stehen, an, während sie andere Räder auf die Schienen des Transferwegs absenkt oder umgekehrt.

Bevorzugt werden zum Wechsel der Fahrtrichtung ein erstes Fahrwerk mit den Rädern für die Schienen des Basisfahrwegs und ein zweites Fahrwerk mit den Rädern für die Schienen des Transferwegs zueinander durch die Hubeinrichtung verschoben.

Bevorzugt werden sowohl die Hubvorrichtung als auch die Hubeinrichtung durch die gleichen Aktuatoren angetrieben.

Weiter bevorzugt fährt die Hubvorrichtung mehrere Höhenpositionen für die Tragfläche des Trägerfahrzeugs an.

Vorzugsweise ist wenigstens eine Höhenposition mit abgesenkten und somit in Kontakt befindlichen Rädern auf den Schienen des Basisfahrwegs gekoppelt und wenigstens eine andere Höhenposition ist mit abgesenkten und somit in Kontakt befindlichen Rädern auf den Schienen des Transferwegs gekoppelt.

Bevorzugt liegt die Tragfläche der zu transportierenden Werkstoffplatten beim Transport einer Werkstoffplatte auf dem Transferweg oberhalb der Plattenablegestelle in der Lagereinrichtung und wird zur Ablage einer Werkstoffplatte auf der Plattenablegestelle auf eine Höhenposition unterhalb der Plattenablegestelle abgesenkt.

Vorzugsweise werden die Trägerfahrzeuge über Induktionsschleifen mit Energie versorgt.

Weiter vorzugsweise wird elektrische Energie in Akkumulatoren auf den Trägerfahrzeugen gespeichert.

Gemäß einer besonders bevorzugten Ausführungsform sind die Trägerfahrzeuge zumindest im unbeladenen Zustand mechanisch voneinander entkoppelt.

Vorzugsweise wird der Abstand von zwei Trägerfahrzeugen durch eine gemeinsame Steuerung der Trägerfahrzeuge gewahrt.

Bevorzugt bewegt die Steuerung die Trägerfahrzeuge im beladenen Zustand abstandssynchron und im unbeladenen Zustand wahlweise abstandssynchron oder unabhängig voneinander. Der Begriff "abstandssynchron" bezeichnet hier die bereits hinlänglich beschriebene Bewegung der beiden Trägerfahrzeuge unter Wahrung ihrer Abstände, d.h. auf dem Basisfahrweg in gleichbleibendem Abstand hintereinander und auf den Transferwegen in gleichförmigen Abstand auf gleicher Höhe parallel nebeneinander. Im unbeladenen Zustand ist eine ebensolche Bewegung möglich, allerdings können die Trägerfahrzeuge auch unabhängig voneinander bewegt werden, falls dies erforderlich ist. Die Entscheidung, welcher dieser Bewegungsmodi gewählt wird, kann aufgrund der augenblicklichen Betriebssituation gefällt werden, beispielsweise unter Auswertung entsprechender Sensordaten und/oder auf Grundlage vorprogrammierter Abläufe.

In diesem Fall erhält die Steuerung bevorzugt ihre Daten von Drehgebern an wenigstens einem Rad.

Gemäß einer weiteren bevorzugten Ausführungsform wird die genaue Position auf einer Schienenkreuzung durch wenigstens einen Transponder für das Schienenpaar des Basisfahrwegs und/oder die Schienenpaare des Transferwegs sichergestellt.

Im Folgenden wird die Erfindung anhand der darstellenden Zeichnungen erläutert. Es zeigen
Fig. 1 eine schematische Draufsicht auf eine erfindungsgemäße Lagereinrichtung,
Fig. 2 eine dreidimensionale Ansicht einer Transporteinrichtung für Werkstoffplatten mit Basisfahrweg und Transferweg zu den Plattenablegestellen,
Fig. 3a und Fig. 3b Trägerfahrzeuge zwischen den Plattenablegestellen mit unterschiedlichen Höhenpositionen der Tragflächen,
Fig. 4 ein erstes Fahrwerk in dreidimensionaler Ansicht mit aufnehmbarer Hubvorrichtung,
Fig. 5 ein erstes Fahrwerk in dreidimensionaler Ansicht von unten mit einführbarem zweitem Fahrwerk,
Fig. 6 ein dem zweiten Fahrwerk übergestülptes erstes Fahrwerk in dreidimensionaler Ansicht von unten,
Fig. 7a und Fig. 7b eine alternative Räderausrichtungseinrichtung mit Stempel zum Abheben und Drehen der Räder und
Fig. 8 eine weitere alternative Räderausrichtungseinrichtung mit Drehtellern im Kreuzungspunkt der Schienen mittels derer die Räder gedreht werden können.

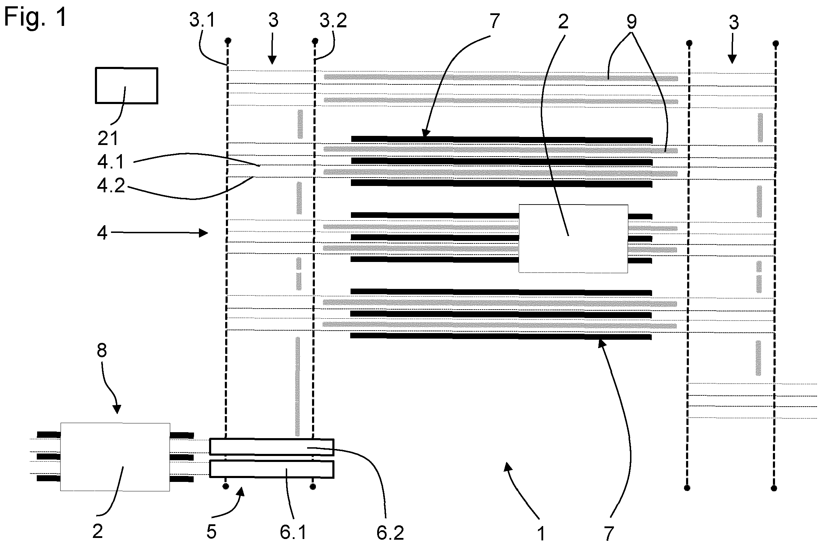

Die schematische Darstellung in Fig. 1 ist quasi eine Draufsicht auf die Lagereinrichtung 1 für Werkstoffplatten(stapel) 2, mit Basisfahrwegen 3, die Schienen 3.1, 3.2 aufweisen und Transferwegen 4, die Schienen 4.1, 4.2 aufweisen. Wenn die Rede von Schienenpaaren ist, so ist pro Schienenpaar entweder jeweils eine Schiene 3.1 und eine Schiene 3.2 auf dem Basisfahrweg oder aber eine Schiene 4.1 und eine Schiene 4.2 auf dem Transferweg beteiligt. Auf beiden Wegen 3, 4 können Transporteinrichtungen 5 verfahren, die geeignet sind, die Werkstoffplatten(stapel) 2 zu tragen. Werkstoffplatten und Werkstoffplattenstapel werden im Folgenden nur noch als Werkstoffplatten 2 bezeichnet. Jede Transporteinrichtung 5 besteht aus zwei Trägerfahrzeugen 6.1, 6.2 mit eigenem Antrieb, wobei eine Steuerung 21 dafür sorgt, dass Trägerfahrzeuge 6.1, 6.2 auf dem Basisfahrweg 3 in gleichbleibendem Abstand A1 hintereinander und auf dem Transferweg 4 in gleichförmigen Abstand A2 auf gleicher Höhe parallel nebeneinander verfahren. Damit die Trägerfahrzeuge sowohl auf dem Basisfahrweg 3 als auch auf dem Transferweg 4 verfahren können, ist eine Räderausrichtungseinrichtung 10 vorhanden, die in mehreren Alternativen im weiteren Verlauf der Beschreibung und Figuren dargestellt und erläutert werden.

Die beiden Trägerfahrzeuge 6.1, 6.2 können auf den Transferwegen 4 und am Plattenaufnahmeort 8 genau zwischen drei balkenförmige Plattenablegestellen 7 für die Werkstoffplatten 2 fahren. Mittels einer später genauer erläuterten Hubvorrichtung 25 kann die Tragfläche 24 der Trägerfahrzeuge 6.1, 6.2 synchronisiert angehoben und abgesenkt werden. So werden Werkstoffplatten bei Beschickung der Lagerplätze über Hubvorrichtungen 25 angehoben, um oberhalb der Plattenablegestelle 7 verfahren werden zu können. An geeigneter Stelle werden die Werkstoffplatten 2 dann abgesenkt und auf den drei Plattenablegestellen 7 abgelegt. Die Trägerfahrzeuge können unterhalb der Werkstoffplatten damit frei verfahren. Entsprechend umgekehrt verläuft der Vorgang bei der Ent- und Aufnahme von Werkstoffplatten 2, nicht nur von den Plattenablegestellen 7 sondern auch am Plattenaufnahmeort 8.

Um die Übersichtlichkeit in Fig. 1 zu wahren, sind die Schienen 3.1, 3.2 des Basisfahrwegs 3 gestrichelt, die Schienen 4.1, 4.2 des Transferwegs 4 durch dünne Linien, die Plattenablegestellen 7 durch dicke schwarze Striche und Induktionsschleifen 9 zur Energieversorgung grau dargestellt.

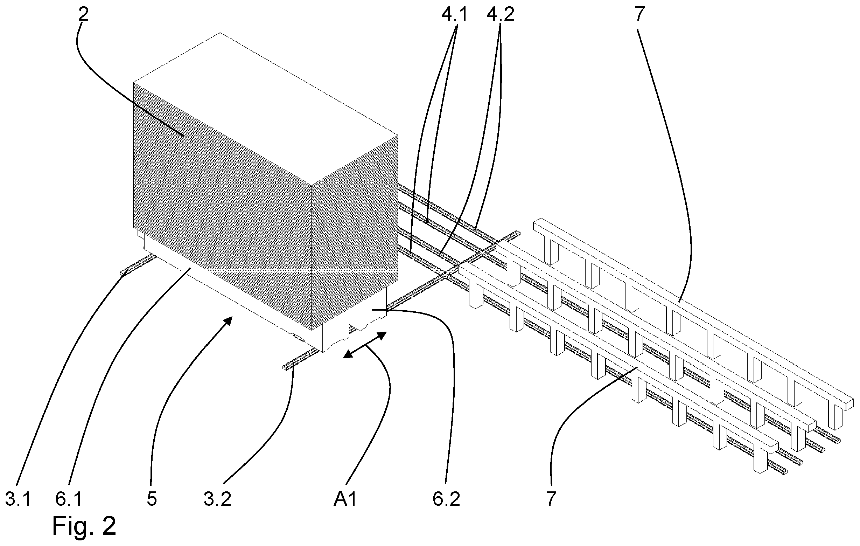

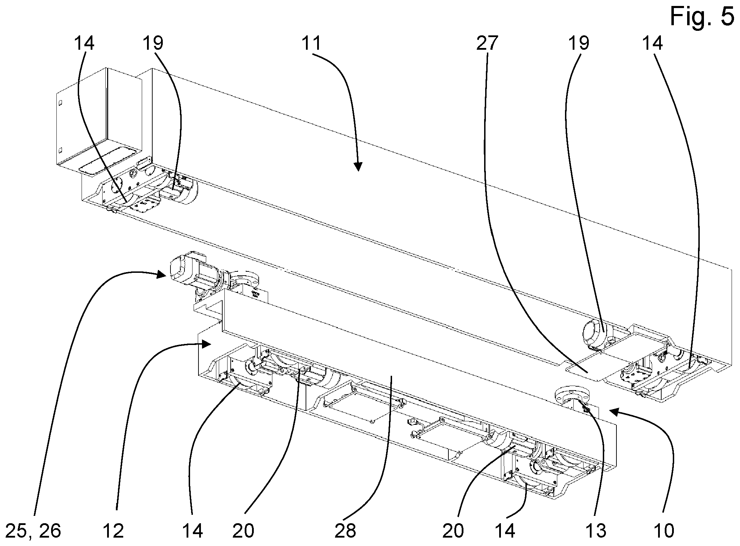

In Fig. 2 ist ein kurzer Streckenabschnitt des Basisfahrwegs 3 und des Transferwegs 4 dreidimensional gezeichnet. Man erkennt zwei Trägerfahrzeuge 6.1, 6.2, die die Transporteinrichtung 5 bilden, auf den Schienen 3.1., 3.2 des Basisfahrwegs 3. Sie tragen gemeinsam Werkstoffplatten 2. Mit dem Bezugszeichen A1 ist angedeutet, dass die Trägerfahrzeuge 6.1, 6.2 stets den gleichen Abstand beibehalten. Mittels der Räderausrichtungseinrichtung 10 (die in den Figuren 5 bis 8 näher erklärt wird) sind die Trägerfahrzeuge 6.1, 6.2 in der Lage, sozusagen rechts abzubiegen und auf den Schienen 4.1, 4.2 des Transferwegs 4 weiterzufahren. Für jedes Trägerfahrzeug 6.1, 6.2 ist ein solches Schienenpaar 4.1, 4.2 vorgesehen, wobei die Schienenpaare exakt parallel verlaufen, jedes zwischen zwei Plattenablegestellen 7.

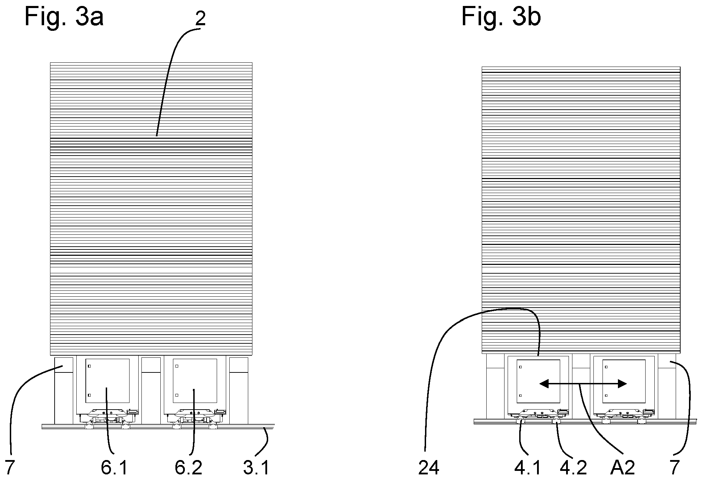

Die Figuren 3a und 3b verdeutlichen, wie die beiden Trägerfahrzeuge 6.1, 6.2 zwischen drei Plattenablegestellen 7 fahren können. Mit dem Bezugszeichen A2 ist angedeutet, dass die Trägerfahrzeuge 6.1, 6.2 stets den gleichen Abstand beibehalten, d.h., dass sie auch immer parallel auf gleicher Höhe verfahren. Während des Transports sind die Abstände A1 und A2 gleich.

Fig. 3a zeigt dabei, wie die Trägerfahrzeuge 6.1, 6.2 Werkstoffplatten 2 ein kleines Stück oberhalb der Plattenablegestellen 7 transportieren. Die Tragfläche 24 der Transporteinrichtung 5 liegt also etwas höher als die Auflage an den Plattenablegestellen 7. Die Tragfläche 24 ist in diesem Fall durch eine hier nicht dargestellte Hubvorrichtung 25 angehoben. Dagegen ist die Tragfläche 24 in Fig. 3b wieder abgesenkt, so dass die Werkstoffplatten auf den Plattenablegestellen 7 abgelegt sind.

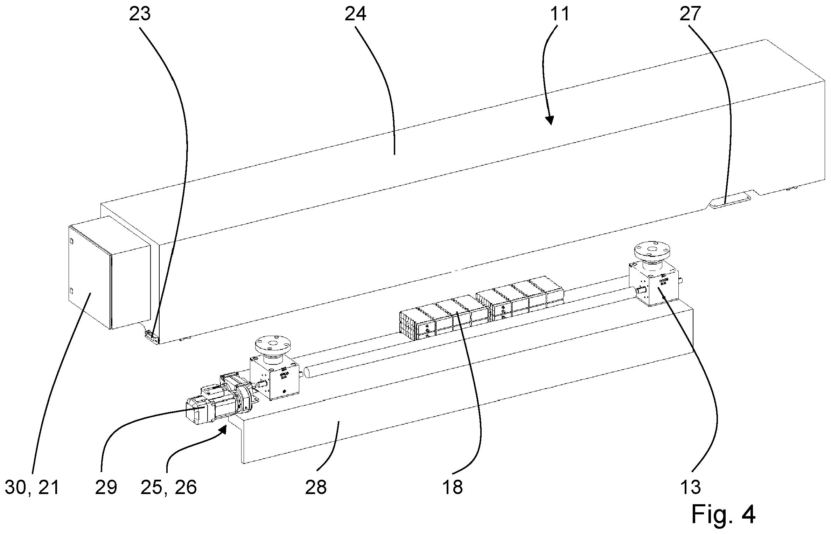

Fig. 4 ist eine Art Explosionszeichnung, die das erste Fahrwerk 11 eines Trägerfahrzeugs 6.1, 6.2 mit einem Hohlraum und die darin unterbringbare Hubvorrichtung 25 sowie die Akkumulatoren 18 für die Stromspeicherung auf einem Träger 28 zeigt. Die Akkumulatoren 18 werden in diesem Ausführungsbeispiel über eine induktive Empfängereinheit 27 gespeist. Mit dem gespeicherten Strom kann neben den nicht dargestellten Antrieben für das Trägerfahrzeug 6.1, 6.2 die Hubvorrichtung 25 betrieben werden. Die Hubvorrichtung 25 umfasst in diesem Ausführungsbeispiel einen Elektromotor 29 und zwei gekoppelte Aktuatoren 13, die das erste Fahrwerk 11 in eingebautem Zustand und somit auch die Tragfläche 24 für die Werkstoffplatten 2 anheben und absenken kann.

Ferner ist in Fig. 4 ein Transponder 23 angedeutet, der mittels eines nicht dargestellten Signalgebers die genaue Position des Trägerfahrzeugs 6.1, 6.2 (insbesondere im Kreuzungsbereich der Schienen) an die externe oder im Schaltkasten 30 befindliche Steuerung 21 weitergeben kann, damit der konstante Abstand A1 synchronisiert werden kann.

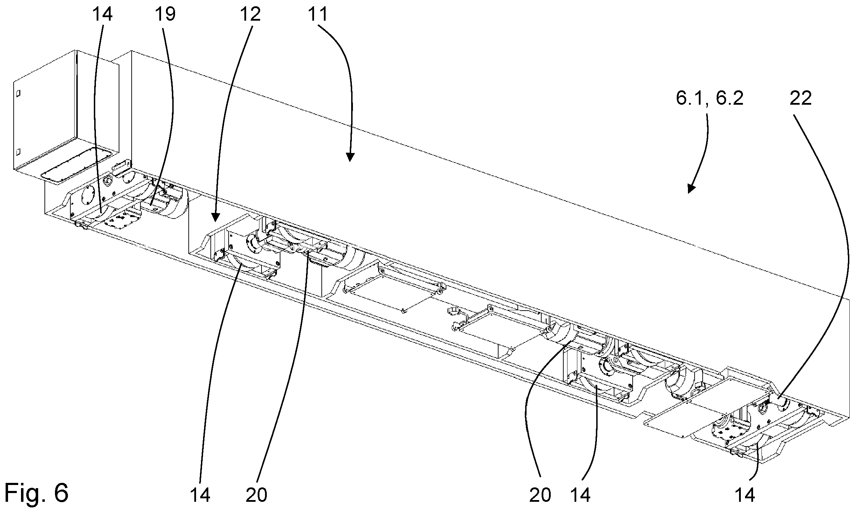

In Fig. 5 ist ebenfalls explosionsartig die Einbaumöglichkeit des zweiten Fahrwerks 12 in das erste Fahrwerk 11 dargestellt, diesmal in einer Ansicht von unten. Fig. 6 zeigt schließlich in ähnlicher Weise das dem zweiten Fahrwerk 12 übergestülpte erste Fahrwerk 11. Man erkennt die Räder 14 der Fahrwerke 11, 12. In diesem Ausführungsbeispiel ist das erste Fahrwerk 11 für den Basisfahrweg 3 vorgesehen und entsprechend tragen die Antriebe für den Basisfahrweg 3 die Bezugszeichen 19. Das zweite Fahrwerk 12 ist für den Transferweg 4 vorgesehen und entsprechend tragen die Antriebe für den Transferweg 4 die Bezugszeichen 20. Um die genaue Position des Trägerfahrzeugs 6.1, 6.2 bestimmbar zu machen, ist ein Drehgeber 22 angedeutet.

Je nachdem wie weit der Aktuator 13 im Rahmen der Hubvorrichtung 25 ausgefahren ist, entscheidet sich nicht nur wie hoch die Tragfläche 24 mit den Werkstoffplatten 2 angehoben wird. Vielmehr bildet der Aktuator 13 gleichzeitig eine Hubeinrichtung 26, die festlegt, ob die Räder 14 der Antriebe 19 für den Basisfahrweg 3 oder die Räder 14 der Antriebe 20 für den Transferweg 4 auf den entsprechenden Schienen aufsetzen. An dieser Stelle sei noch einmal die Terminologie, wonach eine Hubvorrichtung 25 zum Anheben und Absenken der zu transportierenden Werkstoffplatten 2 dient, während eine Hubeinrichtung 26 die aktiven Räder 14 auf den Schienen des Basisfahrwegs 3 oder denen des Transferweges 4 definieren, hingewiesen. An Kreuzungspunkten der Schienen 3.1, 3.2 bzw. 4.1, 4.2 werden bei eingefahrenem Aktuator 13 die Räder 14 der Antriebe 19 für den Basisfahrweg 3 auf den Schienen stehen, während bei ausgefahrenem Aktuator die Räder 14 der Antriebe 20 für den Transferweg 4 auf den Schienen stehen. In der konstruktiv bevorzugten Ausgestaltung ist das erste Fahrwerk 11 als nach unten offener Quader ausgebildet, also mit vier Seitenwänden und einer Deckfläche. Obenauf wird die Deckfläche zur Tragfläche 24 für die Werkstoffplatten 2. An den unteren Kanten des ersten Fahrwerks 11 sind wenigstens vier Räder 14 angebracht, die beispielsweise auf den Schienen 3.1, 3.2 des Basisfahrwegs 3 laufen. Von unten in die Öffnung des ersten Fahrwerks 11 wird das zweite Fahrwerk 12 eingebracht, das ebenfalls mindestens vier Räder 14 aufweist, die beispielsweise auf die Schienen 4.1, 4.2 des Transferwegs 4 aufsetzen können. Die Hubeinrichtung 26 zwischen den beiden Fahrwerken 11, 12 sorgt dafür, dass die Fahrtrichtung gewechselt werden kann, indem entweder das erste oder das zweite Fahrwerk auf den zugeordneten Schienen steht.

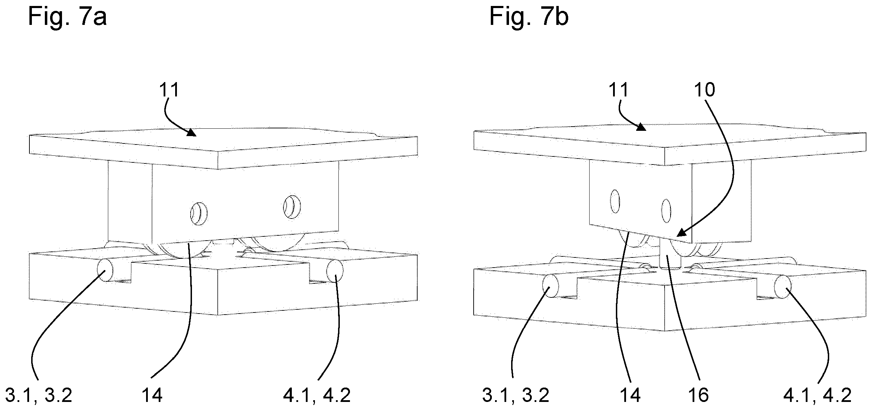

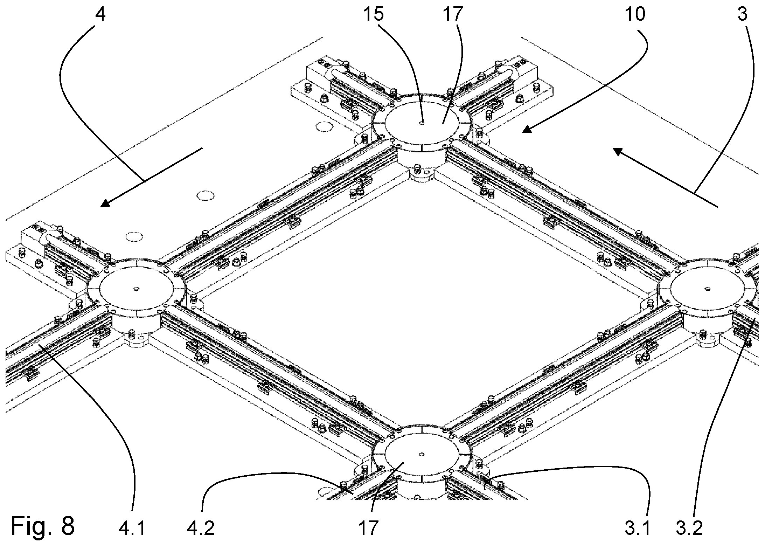

Diese bevorzugte Umschaltung einer Räderausrichtungseinrichtung 10 der Fahrtrichtung ist besonders einfach aufgebaut. Es gibt aber auch noch zwei alternative Möglichkeiten, die ebenfalls von der Erfindung erfasst sein sollen und in den Figuren 7 und 8 erläutert werden.

**In** beiden Fällen kommt man hier mit nur einem Fahrwerk 11 aus. Wie in der vorangegangenen Ausführungsform laufen die Räder 14 auf den Rundschienen 3.1, 3.2, 4.1, 4.2.

Gemäß den Figuren 7a und 7b befinden sich zwei Räder 14 in einer Radkassette. Zwischen den Rädern ist ein ausfahrbarer Stempel 16 angeordnet. Wenn dieser genau im Kreuzungspunkt von zwei Schienen ausfährt, kann die von den Schienen abgehobene drehbar gelagerte Radkassette motorisch um 90° um eine senkrechte Achse, die der Längsachse des Stempels 16 entspricht, gedreht werden. Wenn der Stempel 16 wieder einfährt, stehen die Räder 14 automatisch auf den kreuzenden Schienen. Dieser Vorgang der Räderausrichtungseinrichtung 10 muss bei allen Rädern bzw. Radkassetten 14 der beiden Trägerfahrzeuge 6.1, 6.2 gleichzeitig eingeleitet werden.

Fig. 8 zeigt alternativ eine Ausführung einer Räderausrichtungseinrichtung 10, die auf wenigstens vier Drehtellern 17 im Kreuzungsbereich von Schienen 3.1, 3.2, 4.1, 4.2 angeordnet sind. Wenn sich die Drehachse 15 der Drehteller 17 mit den senkrechten Drehachsen der Räder bzw. Radkassetten 14 deckt, so können die Räder um 90° gedreht werden.

Dabei kann der Drehantrieb (nicht dargestellt) sowohl über das Rad 14 als auch über den Drehteller 17 erfolgen. Wie bei den vorangegangenen Ausführungsbeispielen muss die Räderausrichtungseinrichtung 10 immer bei allen Rädern 14 der beiden Trägerfahrzeuge 6.1, 6.2 gleichzeitig aktiviert werden.

### Bezugszeichenliste

- 1: Lagereinrichtung
- 2: Werkstoffplatten(stapel)
- 3: Basisfahrweg
- 3.1, 3.2: Schienen Basisfahrweg
- 4: Transferweg
- 4.1, 4.2: Schienen Transferweg
- 5: Transporteinrichtung
- 6.1, 6.2: Trägerfahrzeug
- 7: Plattenablegestelle
- 8: Plattenaufnahmeort
- 9: Induktionsschleife
- 10: Räderausrichtungseinrichtung
- 11: Erstes Fahrwerk
- 12: Zweites Fahrwerk
- 13: Aktuator
- 14: Drehbares Rad bzw. Radkassette
- 15: Drehachse
- 16: Stempel
- 17: Drehteller
- 18: Akkumulator, Stromspeicher, Kondensator
- 19: Antrieb Basisfahrweg
- 20: Antrieb Transferweg
- 21: Steuerung
- 22: Drehgeber
- 23: Transponder
- 24: Tragfläche
- 25: Hubvorrichtung
- 26: Hubeinrichtung
- 27: Empfängereinheit
- 28: Träger
- 29: Elektromotor
- 30: Schaltkasten
- A1, A2: Abstand

## Patentansprüche

1. Lagereinrichtung für Werkstoffplatten (2) mit
a) wenigstens einem schienengebundenen Basisfahrweg (3) mit mindestens einem Schienenpaar (3.1, 3.2) und mindestens einem zu Plattenablegestellen (7) führenden schienengebundenen Transferweg (4) mit mindestens zwei Schienenpaaren (4.1, 4.2), wobei das Schienenpaar des Basisfahrwegs (3) und die Schienenpaare des Transferwegs (4) im Wesentlichen rechtwinklig aufeinandertreffen,
b) wenigstens einer Transporteinrichtung (5) bestehend aus zwei Trägerfahrzeugen (6.1, 6.2) mit eigenem Antrieb (19, 20), die beim Transport auf gleichbleibenden Abstand (A1, A2) zueinander synchronisierbar sind und die in der Lage sind, gemeinsam die zu transportierenden Werkstoffplatten (2) aufzunehmen, und
c) jeweils einer an beiden Trägerfahrzeugen (6.1, 6.2) vorhandenen ebenfalls synchronisierbaren Hubvorrichtung (25), mittels derer Werkstoffplatten (2) aufnehmbar und auf den Plattenablegestellen (7) in der Lagereinrichtung ablegbar sind,
**dadurch gekennzeichnet, dass**
die Transporteinrichtung (5) durch eine Räderausrichtungseinrichtung (10) sowohl auf dem Basisfahrweg (3) als auch auf dem Transferweg (4) verfahrbar ist, und zwar dergestalt, dass die Trägerfahrzeuge (6.1, 6.2) auf dem Basisfahrweg (3) in gleichbleibendem Abstand (A1) hintereinander und auf den Transferwegen (4) in gleichförmigen Abstand (A2) auf gleicher Höhe parallel nebeneinander verfahrbar sind.

2. Lagereinrichtung gemäß Anspruch 1, **dadurch gekennzeichnet, dass** der gleichbleibende Abstand (A1) der beiden Trägerfahrzeuge (6.1, 6.2) auf dem Basisfahrweg (3) sich mit dem Abstand der wenigstens zwei Schienenpaare (jeweils 4.1, 4.2) auf dem Transferweg (4) derart deckt, dass nach Aktivierung der Räderausrichtungseinrichtung (10) die aktiven Räder (14) auf den Transferschienen verfahrbar sind.

3. Lagereinrichtung gemäß Anspruch 1 oder 2, **dadurch gekennzeichnet, dass** die Räderausrichtungseinrichtung (10) mit den Fahrwerkskomponenten (11, 12) der Trägerfahrzeuge verbunden ist.

4. Lagereinrichtung gemäß einem der Ansprüche 1 bis 3, **dadurch gekennzeichnet, dass** im Kreuzungsbereich der Schienen (3.1, 3.2, 4.1, 4.2) jeweils ein drehbarer Teller (17) auf Schienenhöhe vorgesehen ist und die Räder (14) der Trägerfahrzeuge (6.1, 6.2) um eine senkrechte Achse drehbar gelagert sind.

5. Lagereinrichtung gemäß einem der Ansprüche 1 bis 3, **dadurch gekennzeichnet, dass** die Räder (14) der Trägerfahrzeuge (6.1, 6.2) um eine senkrechte Achse motorisch drehbar gelagert sind und sie durch wenigstens einen Druckstempel (16), der geeignet ist, das Trägerfahrzeug (6.1, 6.2) anzuheben, zumindest kurzzeitig entlastbar sind, bis die Räder (14) um etwa 90° gedreht sind.

6. Lagereinrichtung gemäß einem der Ansprüche 1 bis 3, **dadurch gekennzeichnet, dass** eine Hubeinrichtung (26) vorhanden ist, die geeignet ist, die Räder (14) der Trägerfahrzeuge (6.1, 6.2), die auf den Schienen (3.1, 3.2) des Basisfahrwegs (3) stehen, anzuheben, während sie andere Räder (14) auf die Schienen (4.1, 4.2) des Transferwegs (4) absenkt oder umgekehrt.

7. Lagereinrichtung gemäß Anspruch 6, **dadurch gekennzeichnet, dass** ein erstes Fahrwerk (11) mit den Rädern für die Schienen (3.1, 3.2) des Basisfahrwegs (3) und ein zweites Fahrwerk (12) mit den Rädern für die Schienen (4.1, 4.2) des Transferwegs (4) zueinander durch die Hubeinrichtung (26) verschiebbar sind.

8. Lagereinrichtung gemäß einem der Ansprüche 6 bis 7, **dadurch gekennzeichnet, dass** sowohl die Hubvorrichtung (25) als auch die Hubeinrichtung (26) die gleichen Aktuatoren (13) umfassen.

9. Lagereinrichtung gemäß einem der Ansprüche 1 bis 8, **dadurch gekennzeichnet, dass** jede Hubvorrichtung (25) geeignet ist, mehrere Höhenpositionen für die Tragfläche (24) des Trägerfahrzeugs (6.1, 6.2) anzufahren.

10. Lagereinrichtung gemäß Anspruch 9, **dadurch gekennzeichnet, dass** wenigstens eine Höhenposition mit abgesenkten und somit in Kontakt befindlichen Rädern auf den Schienen (3.1, 3.2) des Basisfahrwegs (3) und wenigstens eine andere Höhenposition mit abgesenkten und somit in Kontakt befindlichen Rädern auf den Schienen (4.1, 4.2) des Transferwegs (4) gekoppelt ist.

11. Lagereinrichtung gemäß Anspruch 9 oder 10, **dadurch gekennzeichnet, dass** wenigstens zwei Höhenpositionen beim Transport auf dem Transferweg (4) einstellbar sind, eine bei der die Tragfläche (24) der zu transportierenden Werkstoffplatten (2) oberhalb und einer bei der die Tragfläche (24) der zu transportierenden Werkstoffplatten (2) unterhalb der Plattenablegestelle (7) in der Lagereinrichtung liegt.

12. Lagereinrichtung nach einem der Ansprüche 1 bis 11, **dadurch gekennzeichnet, dass** die Trägerfahrzeuge (6.1, 6.2) über Induktionsschleifen (9) mit Energie versorgbar sind.

13. Lagereinrichtung gemäß Anspruch 12, **dadurch gekennzeichnet, dass** elektrische Energie in Akkumulatoren (18) auf den Trägerfahrzeugen (6.1, 6.2) speicherbar ist.

14. Lagereinrichtung gemäß einem der Ansprüche 1 bis 13, **dadurch gekennzeichnet, dass** die Trägerfahrzeuge (6.1, 6.2) zumindest im unbeladenen Zustand mechanisch voneinander entkoppelt sind.

15. Lagereinrichtung gemäß einem der Ansprüche 1 bis 14,
**gekennzeichnet durch** eine Steuerung (21) zur Abstandswahrung von zwei Trägerfahrzeugen (6.1, 6.2).

16. Lagereinrichtung gemäß Anspruch 15, **dadurch gekennzeichnet, dass** die Steuerung (21) ihre Daten von Drehgebern (22) an wenigstens einem Rad (14) erhält.

17. Lagereinrichtung gemäß einem der Ansprüche 1 bis 16, **dadurch gekennzeichnet, dass** wenigstens ein Transponder (23) für das Schienenpaar (3.1, 3.2) eines Basisfahrwegs (3) und/oder die Schienenpaare (jeweils 4.1, 4.2) eines Transferwegs (4) vorhanden ist, um eine genaue Position auf einer Schienenkreuzung sicherzustellen.

18. Lagereinrichtung nach einem der Ansprüche 1 bis 17, **dadurch gekennzeichnet, dass** wenigstens zwei parallele Basisfahrwege (3) in der Lagereinrichtung (1) vorhanden sind.

19. Verfahren zum Betrieb einer Lagereinrichtung für Werkstoffplatten (2), welche Lagereinrichtung folgendes umfasst:
a) wenigstens einen schienengebundenen Basisfahrweg (3) mit mindestens einem Schienenpaar (3.1, 3.2) und mindestens einem zu Plattenablegestellen (7) führenden schienengebundenen Transferweg (4) mit mindestens zwei Schienenpaaren (4.1, 4.2), wobei das Schienenpaar des Basisfahrwegs (3) und die Schienenpaare des Transferwegs (4) im Wesentlichen rechtwinklig aufeinandertreffen,
b) wenigstens eine Transporteinrichtung (5), bestehend aus zwei Trägerfahrzeugen (6.1, 6.2) mit eigenem Antrieb (19, 20), die beim Transport auf gleichbleibenden Abstand (A1, A2) zueinander synchronisierbar sind und die in der Lage sind, gemeinsam die zu transportierenden Werkstoffplatten (2) aufzunehmen, und
c) jeweils eine an beiden Trägerfahrzeugen (6.1, 6.2) vorhandene ebenfalls synchronisierbare Hubvorrichtung (25), mittels derer Werkstoffplatten (2) aufnehmbar und auf den Plattenablegestellen (7) in der Lagereinrichtung ablegbar sind,
welches Verfahren **dadurch gekennzeichnet ist, dass**
die Transporteinrichtung (5) durch eine Räderausrichtungseinrichtung (10) sowohl auf dem Basisfahrweg (3) als auch auf dem Transferweg (4) verfahren wird, und zwar dergestalt, dass die Trägerfahrzeuge (6.1, 6.2) auf dem Basisfahrweg (3) in gleichbleibendem Abstand (A1) hintereinander und auf den Transferwegen (4) in gleichförmigen Abstand (A2) auf gleicher Höhe parallel nebeneinander verfahren werden, wobei die zu transportierenden Werkstoffplatten dabei ihre Lage auf den beiden Trägerfahrzeugen (6.1, 6.2) beibehalten und relativ zu der gesamten Transporteinrichtung (5) nicht bewegt oder verschoben werden.

20. Verfahren gemäß Anspruch 19, **dadurch gekennzeichnet, dass** der gleichbleibende Abstand (A1) der beiden Trägerfahrzeuge (6.1, 6.2) auf dem Basisfahrweg (3) sich mit dem Abstand der wenigstens zwei Schienenpaare (jeweils 4.1, 4.2) auf dem Transferweg (4) derart deckt, dass nach Aktivierung der Räderausrichtungseinrichtung (10) die aktiven Räder (14) auf den Transferschienen verfahrbar sind.

21. Verfahren gemäß Anspruch 19 oder 20, **dadurch gekennzeichnet, dass** die Räderausrichtungseinrichtung (10) mit den Fahrwerkskomponenten (11, 12) der Trägerfahrzeuge verbunden ist.

22. Verfahren gemäß einem der Ansprüche 19 bis 21, **dadurch gekennzeichnet, dass** die Räder (14) der Trägerfahrzeuge (6.1, 6.2) zum Wechsel der Fahrtrichtung um eine senkrechte Achse gedreht werden.

23. Verfahren gemäß Anspruch 22, **dadurch gekennzeichnet, dass** die Räder (14) gedreht werden, während sie auf drehbaren Tellern (17) im Kreuzungsbereich der Schienen (3.1, 3.2, 4.1, 4.2) ruhen.

24. Verfahren gemäß Anspruch 22, **dadurch gekennzeichnet, dass** die Räder (14) der Trägerfahrzeuge (6.1, 6.2) um eine senkrechte Achse motorisch drehbar gelagert sind und sie während der Drehung durch wenigstens einen Druckstempel (16), der das Trägerfahrzeug (6.1, 6.2) anhebt, zumindest kurzzeitig entlastet werden, bis sie um etwa 90° gedreht sind.

25. Verfahren gemäß einem der Ansprüche 19 bis 21, **dadurch gekennzeichnet, dass** zum Wechsel der Fahrtrichtung eine Hubeinrichtung (26) die Räder (14) der Trägerfahrzeuge (6.1, 6.2), die auf den Schienen (3.1, 3.2) des Basisfahrwegs (3) stehen, anhebt, während sie andere Räder (14) auf die Schienen (4.1, 4.2) des Transferwegs (4) absenkt oder umgekehrt.

26. Verfahren gemäß Anspruch 25, **dadurch gekennzeichnet, dass** zum Wechsel der Fahrtrichtung ein erstes Fahrwerk (11) mit den Rädern für die Schienen (3.1, 3.2) des Basisfahrwegs (3) und ein zweites Fahrwerk (12) mit den Rädern für die Schienen (4.1, 4.2) des Transferwegs (4) zueinander durch die Hubeinrichtung (26) verschoben werden.

27. Verfahren gemäß einem der Ansprüche 25 bis 26, **dadurch gekennzeichnet, dass** sowohl die Hubvorrichtung (25) als auch die Hubeinrichtung (26) durch die gleichen Aktuatoren (13) angetrieben werden.

28. Verfahren gemäß einem der Ansprüche 19 bis 27, **dadurch gekennzeichnet, dass** die Hubvorrichtung (25) mehrere Höhenpositionen für die Tragfläche (24) des Trägerfahrzeugs (6.1, 6.2) anfährt.

29. Verfahren gemäß Anspruch 28, **dadurch gekennzeichnet, dass** wenigstens eine Höhenposition mit abgesenkten und somit in Kontakt befindlichen Rädern auf den Schienen (3.1, 3.2) des Basisfahrwegs (3) gekoppelt ist und wenigstens eine andere Höhenposition mit abgesenkten und somit in Kontakt befindlichen Rädern auf den Schienen (4.1, 4.2) des Transferwegs (4) gekoppelt ist.

30. Verfahren gemäß Anspruch 28 oder 29, **dadurch gekennzeichnet, dass** die Tragfläche (24) der zu transportierenden Werkstoffplatten (2) beim Transport einer Werkstoffplatte (2) auf dem Transferweg (4) oberhalb der Plattenablegestelle (7) in der Lagereinrichtung liegt und zur Ablage einer Werkstoffplatte (2) auf der Plattenablegestelle (7) auf eine Höhenposition unterhalb der Plattenablegestelle (7) abgesenkt wird.

31. Verfahren nach einem der Ansprüche 19 bis 30, **dadurch gekennzeichnet, dass** die Trägerfahrzeuge (6.1, 6.2) über Induktionsschleifen (9) mit Energie versorgt werden.

32. Verfahren gemäß Anspruch 31, **dadurch gekennzeichnet, dass** elektrische Energie in Akkumulatoren (18) auf den Trägerfahrzeugen (6.1, 6.2) gespeichert wird.

33. Verfahren gemäß einem der Ansprüche 19 bis 30, **dadurch gekennzeichnet, dass** die Trägerfahrzeuge (6.1, 6.2) zumindest im unbeladenen Zustand mechanisch voneinander entkoppelt sind.

34. Verfahren gemäß einem der Ansprüche 19 bis 33, **dadurch gekennzeichnet, dass** der Abstand von zwei Trägerfahrzeugen (6.1, 6.2) durch eine gemeinsame Steuerung (21) der Trägerfahrzeuge (6.1, 6.2) gewahrt wird.

35. Verfahren gemäß Anspruch 34, **dadurch gekennzeichnet, dass** die Steuerung (21) die Trägerfahrzeuge (6.1, 6.2) im beladenen Zustand abstandssynchron bewegt und im unbeladenen Zustand wahlweise abstandssynchron oder unabhängig voneinander bewegt werden.

36. Verfahren gemäß Anspruch 34 oder 35, **dadurch gekennzeichnet, dass** die Steuerung (21) ihre Daten von Drehgebern (22) an wenigstens einem Rad (14) erhält.

37. Verfahren gemäß einem der Ansprüche 19 bis 36, **dadurch gekennzeichnet, dass** die genaue Position auf einer Schienenkreuzung durch wenigstens einen Transponder (23) für das Schienenpaar (3.1, 3.2) des Basisfahrwegs (3) und/oder die Schienenpaare (jeweils 4.1, 4.2) des Transferwegs (4) sichergestellt wird.

## Claims

1. Storage device for material boards (2) with a) at least one rail-bound base track (3) with at least one pair of rails (3.1, 3.2) and at least one rail-bound transfer path (4) leading to board-depositing stands (7) with at least two pairs of rails (4.1, 4.2), wherein the pair of rails of the base track (3) and the pairs of rails of the transfer path (4) meet one another substantially at right angles, b) at least one transport device (5) consisting of two carrier vehicles (6.1, 6.2) with their own drive (19, 20), which can be synchronized with one another at a constant distance (A1, A2) during transport and which are able to jointly receive the material boards (2) to be transported, and c) each one respective lifting device (25) respectively present on both carrier vehicles (6.1, 6.2) that can also be synchronized and by means of which material boards (2) can be received and deposited on the board-depositing stands (7) in the storage device, **characterized in that** the transport device (5) can be moved both on the base track (3) and on the transfer path (4) by means of a wheel alignment device (10), specifically in such a way that the carrier vehicles (6.1, 6.2) can be moved one behind the other at a constant distance (A1) on the base track (3) and can be moved parallel next to one another at the same height at a uniform distance (A2) on the transfer paths (4).

2. Storage device according to Claim 1, **characterized in that** the constant distance (A1) of the two carrier vehicles (6.1, 6.2) on the base track (3) coincides with the distance of the at least two pairs of rails (4.1, 4.2 respectively) on the transfer path (4), **in that**, after activation of the wheel alignment device (10), the active wheels (14) can be moved on the transfer rails.

3. Storage device according to Claim 1 or 2, **characterized in that** the wheel alignment device (10) is connected to the chassis components (11, 12) of the carrier vehicles.

4. Storage device according to one of Claims 1 to 3, **characterized in that** in the intersection region of the rails (3.1, 3.2, 4.1, 4.2), each one respective rotatable plate (17) at rail level is provided and the wheels (14) of the carrier vehicles (6.1, 6.2) are mounted rotatably about a vertical axis.

5. Storage device according to one of Claims 1 to 3, **characterized in that** the wheels (14) of the carrier vehicles (6.1, 6.2) are mounted rotatably about a vertical axis in a motorized manner and they can be relieved at least for a short time by at least one pressure ram (16), which is suitable for raising the carrier vehicle (6.1, 6.2), until the wheels (14) are rotated through approximately 90°.

6. Storage device according to one of Claims 1 to 3, **characterized in that** a lifting device (26) is present, which is suitable for raising the wheels (14) of the carrier vehicles (6.1, 6.2), which are standing on the rails (3.1, 3.2) of the base track (3), while it lowers other wheels (14) onto the rails (4.1, 4.2) of the transfer path (4) or vice versa.

7. Storage device according to Claim 6, **characterized in that** a first chassis (11) with the wheels for the rails (3.1, 3.2) of the base track (3) and a second chassis (12) with the wheels for the rails (4.1, 4.2) of the transfer path (4) can be displaced relative to one another by the lifting device (26).

8. Storage device according to one of Claims 6 to 7, **characterized in that** both the lifting device (25) and the lifting device (26) comprise the same actuators (13).

9. Storage device according to one of Claims 1 to 8, **characterized in that** each lifting device (25) is suitable for approaching a plurality of height positions for the carrying surface (24) of the carrier vehicle (6.1, 6.2).

10. Storage device according to Claim 9, **characterized in that** at least one height position is coupled to wheels which are lowered and thus in contact on the rails (3.1, 3.2) of the base track (3) and at least one other height position is coupled to wheels which are lowered and thus in contact on the rails (4.1, 4.2) of the transfer path (4).

11. Storage device according to Claim 9 or 10, **characterized in that** at least two height positions can be set during transport on the transfer path (4), one at which the carrying surface (24) of the material boards (2) to be transported lies above and one at which the carrying surface (24) of the material boards (2) to be transported lies below the board-depositing stands (7) in the storage device.

12. Storage device according to one of Claims 1 to 11, **characterized in that** the carrier vehicles (6.1, 6.2) can be supplied with energy via induction loops (9).

13. Storage device according to Claim 12, **characterized in that** electrical energy can be stored in accumulators (18) on the carrier vehicles (6.1, 6.2).

14. Storage device according to one of Claims 1 to 13, **characterized in that** the carrier vehicles (6.1, 6.2) are mechanically decoupled from one another at least in the unloaded state.

15. Storage device according to one of Claims 1 to 14, **characterized by** a controller (21) for maintaining the distance between two carrier vehicles (6.1, 6.2).

16. Storage device according to Claim 15, **characterized in that** the controller (21) receives its data from rotary encoders (22) on at least one wheel (14).

17. Storage device according to one of Claims 1 to 16, **characterized in that** at least one transponder (23) for the pair of rails (3.1, 3.2) of a base track (3) and/or the pairs of rails (4.1, 4.2 respectively) of a transfer path (4) is present in order to ensure an exact position on a rail intersection.

18. Storage device according to one of Claims 1 to 17, **characterized in that** at least two parallel base tracks (3) are present in the storage device (1).

19. Method for operating a storage device for material boards (2), which storage device comprises the following: a) at least one rail-bound base track (3) with at least one pair of rails (3.1, 3.2) and at least one rail-bound transfer path (4) leading to board-depositing stands (7) with at least two pairs of rails (4.1, 4.2), wherein the pair of rails of the base track (3) and the pairs of rails of the transfer path (4) meet one another substantially at right angles, b) at least one transport device (5) consisting of two carrier vehicles (6.1, 6.2) with their own drive (19, 20), which can be synchronized with one another at a constant distance (A1, A2) during transport and which are able to jointly receive the material boards (2) to be transported, and c) each one respective lifting device (25) respectively present on both carrier vehicles (6.1, 6.2) that can also be synchronized and by means of which material boards (2) can be received and deposited on the board-depositing stands (7) in the storage device, which method is **characterized in that** the transport device (5) is moved both on the base track (3) and on the transfer path (4) by means of a wheel alignment device (10), specifically in such a way that the carrier vehicles (6.1, 6.2) are moved one behind the other at a constant distance (A1) on the base track (3) and are moved parallel next to one another at the same height at a uniform distance (A2) on the transfer paths (4), during which the material boards to be transported maintain their position on the two carrier vehicles (6.1, 6.2) and are not moved or displaced relative to the entire transport device (5).

20. Method according to Claim 19, **characterized in that** the constant distance (A1) of the two carrier vehicles (6.1, 6.2) on the base track (3) coincides with the distance of the at least two pairs of rails (4.1, 4.2 respectively) on the transfer path (4) in such a way that, after activation of the wheel alignment device (10), the active wheels (14) can be moved on the transfer rails.

21. Method according to Claim 19 or 20, **characterized in that** the wheel alignment device (10) is connected to the chassis components (11, 12) of the carrier vehicles.

22. Method according to one of Claims 19 to 21, **characterized in that** the wheels (14) of the carrier vehicles (6.1, 6.2) are rotated about a vertical axis in order to change the direction of travel.

23. Method according to Claim 22, **characterized in that** the wheels (14) are rotated while they rest on rotatable plates (17) in the intersection region of the rails (3.1, 3.2, 4.1, 4.2).

24. Method according to Claim 22, **characterized in that** the wheels (14) of the carrier vehicles (6.1, 6.2) are mounted rotatably about a vertical axis in a motorized manner and they are relieved at least for a short time during the rotation by at least one pressure ram (16), which raises the carrier vehicle (6.1, 6.2), until they are rotated through approximately 90°.

25. Method according to one of Claims 19 to 21, **characterized in that**, in order to change the direction of travel, a lifting device (26) raises the wheels (14) of the carrier vehicles (6.1, 6.2), which are standing on the rails (3.1, 3.2) of the base track (3), while it lowers other wheels (14) onto the rails (4.1, 4.2) of the transfer path (4) or vice versa.

26. Method according to Claim 25, **characterized in that**, in order to change the direction of travel, a first chassis (11) with the wheels for the rails (3.1, 3.2) of the base track (3) and a second chassis (12) with the wheels for the rails (4.1, 4.2) of the transfer path (4) are displaced relative to one another by the lifting device (26).

27. Method according to one of Claims 25 to 26, **characterized in that** both the lifting device (25) and the lifting device (26) are driven by the same actuators (13).

28. Method according to one of Claims 19 to 27, **characterized in that** the lifting device (25) approaches a plurality of height positions for the carrying surface (24) of the carrier vehicle (6.1, 6.2).

29. Method according to Claim 28, **characterized in that** at least one height position is coupled to wheels which are lowered and thus in contact on the rails (3.1, 3.2) of the base track (3) and at least one other height position is coupled to wheels which are lowered and thus in contact on the rails (4.1, 4.2) of the transfer path (4).

30. Method according to Claim 28 or 29, **characterized in that** the carrying surface (24) of the material boards (2) to be transported lies above the board-depositing stands (7) in the storage device during transport of a material board (2) on the transfer path (4) and is lowered to a height position below the board-depositing stands (7) in order to deposit a material board (2) on the board-depositing stands (7).

31. Method according to one of Claims 19 to 30, **characterized in that** the carrier vehicles (6.1, 6.2) are supplied with energy via induction loops (9).

32. Method according to Claim 31, **characterized in that** electrical energy is stored in accumulators (18) on the carrier vehicles (6.1, 6.2).

33. Method according to one of Claims 19 to 30, **characterized in that** the carrier vehicles (6.1, 6.2) are mechanically decoupled from one another at least in the unloaded state.

34. Method according to one of Claims 19 to 33, **characterized in that** the distance between two carrier vehicles (6.1, 6.2) is maintained by a common controller (21) of the carrier vehicles (6.1, 6.2).

35. Method according to Claim 34, **characterized in that** the controller (21) moves the carrier vehicles (6.1, 6.2) in a distance-synchronized manner in the loaded state and, in the unloaded state, moves them either in a distance-synchronized manner or independently of one another.

36. Method according to Claim 34 or 35, **characterized in that** the controller (21) receives its data from rotary encoders (22) on at least one wheel (14).

37. Method according to one of Claims 19 to 36, **characterized in that** the exact position on a rail intersection is ensured by at least one transponder (23) for the pair of rails (3.1, 3.2) of the base track (3) and/or the pairs of rails (4.1, 4.2 respectively) of the transfer path (4).

## Revendications

1. Dispositif de stockage pour des plaques de matériau (2) comportant :
a) au moins un trajet de déplacement de base sur rails (3) ayant au moins une paire de rails (3.1, 3.2) et au moins un trajet de transfert sur rails (4) menant jusqu'à des emplacements de dépose de plaques (7) ayant au moins deux paires de rails (4.1, 4.2), dans lequel la paire de rails du trajet de déplacement de base (3) et les paires de rails du trajet de transfert (4) se croisent pratiquement à angle droit,
b) au moins un dispositif de transport (5) constitué de deux véhicules porteurs (6.1, 6.2) ayant un entraînement propre (19, 20) qui peuvent être synchronisés l'un par rapport à l'autre à une distance constante (A1, A2) pendant le transport et qui sont capables de recevoir ensemble les plaques de matériau (2) à transporter, et
c) un dispositif de levage (25) pouvant être synchronisé de la même manière et présent sur chacun des deux véhicules porteurs (6.1, 6.2), au moyen duquel des plaques de matériau (2) peuvent être reçues et déposées dans le dispositif de stockage sur les emplacements de dépose de plaques (7),
**caractérisé en ce que**
le dispositif de transport (5) peut être déplacé par un dispositif d'alignement de roues (10) à la fois sur le trajet de déplacement de base (3) et sur le trajet de transfert (4) et de telle sorte que les véhicules porteurs (6.1, 6.2) peuvent être déplacés sur le trajet de déplacement de base (3) l'un derrière l'autre à une distance constante (A1) ainsi que sur les trajets de déplacement de transfert (4) parallèlement l'un à l'autre à une distance constante (A2) à la même hauteur.

2. Dispositif de stockage selon la revendication 1, **caractérisé en ce que** la distance constante (A1) entre les deux véhicules porteurs (6.1, 6.2) sur le trajet de déplacement de base (3) correspond à la distance entre les au moins deux paires de rails (respectivement 4.1, 4.2) sur le trajet de transfert (4), de telle sorte qu'après activation du dispositif d'alignement de roues (10), les roues actives (14) peuvent être déplacées sur les rails de transfert.

3. Dispositif de stockage selon la revendication 1 ou 2, **caractérisé en ce que** le dispositif d'alignement de roues (10) est relié aux composants de châssis (11, 12) des véhicules porteurs.

4. Dispositif de stockage selon l'une des revendications 1 à 3, **caractérisé en ce que**, dans la zone de croisement des rails (3.1, 3.2, 4.1, 4.2), un disque rotatif (17) est respectivement prévu à hauteur de rail et les roues (14) des véhicules porteurs (6.1, 6.2) sont montées de manière à pouvoir tourner autour d'un axe vertical.

5. Dispositif de stockage selon l'une des revendications 1 à 3, **caractérisé en ce que** les roues (14) des véhicules porteurs (6.1, 6.2) sont montées de manière à pouvoir tourner, au moyen d'un moteur, autour d'un axe vertical et elles peuvent être soulagées au moins pendant une courte durée par au moins un piston de pression (16) qui est adapté pour soulever le véhicule porteur (6.1, 6.2), jusqu'à ce que les roues (14) soient tournées d'environ 90°.

6. Dispositif de stockage selon l'une des revendications 1 à 3, **caractérisé en ce qu'**il existe un dispositif de levage (26) qui est adapté pour soulever les roues (14) des véhicules porteurs (6.1, 6.2) qui portent sur les rails (3.1, 3.2) du trajet de déplacement de base (3), tout en abaissant d'autres roues (14) sur les rails (4.1, 4.2) du trajet de transfert (4), ou inversement.

7. . Dispositif de stockage selon la revendication 6, **caractérisé en ce qu'**un premier châssis (11) avec les roues pour les rails (3.1, 3.2) du trajet de déplacement de base (3) et un second châssis (12) avec les roues pour les rails (4.1, 4.2) du trajet de transfert (4) peuvent être déplacés l'un par rapport à l'autre par le dispositif de levage (26).

8. Dispositif de stockage selon l'une des revendications 6 à 7, **caractérisé en ce que** le dispositif de levage (25) et le dispositif de levage (26) comprennent tous deux les mêmes actionneurs (13).

9. Dispositif de stockage selon l'une des revendications 1 à 8, **caractérisé en ce que** chaque dispositif de levage (25) est adapté pour s'approcher de plusieurs positions en hauteur pour la surface de support (24) du véhicule porteur (6.1, 6.2).

10. Dispositif de stockage selon la revendication 9, **caractérisé en ce qu'**au moins une position en hauteur est couplée à des roues abaissées sur, et donc en contact avec, les rails (3.1, 3.2) du trajet de déplacement de base (3), et au moins une autre position en hauteur est couplée à des roues abaissées sur, et donc en contact avec, les rails (4.1, 4.2) du trajet de transfert (4).

11. Dispositif de stockage selon la revendication 9 ou 10, **caractérisé en ce qu'**au moins deux positions en hauteur peuvent être réglées au cours du transport sur le trajet de transfert (4), l'une étant la position dans laquelle la surface de support (24) des plaques de matériau (2) à transporter se situe au-dessus, et l'autre étant la position dans laquelle la surface de support (24) des plaques de matériau (2) à transporter se situe en dessous de l'emplacement de dépose de plaques (7) dans le dispositif de stockage.

12. Dispositif de stockage selon l'une des revendications 1 à 11, **caractérisé en ce que** les véhicules porteurs (6.1, 6.2) peuvent être alimentés en énergie par des boucles d'induction (9).

13. Dispositif de stockage selon la revendication 12, **caractérisé en ce que** de l'énergie électrique peut être stockée dans des accumulateurs (18) sur les véhicules porteurs (6.1, 6.2).

14. Dispositif de stockage selon l'une des revendications 1 à 13, **caractérisé en ce que** les véhicules porteurs (6.1, 6.2) sont mécaniquement découplés l'un de l'autre, au moins à l'état déchargé.

15. Dispositif de stockage selon l'une des revendications 1 à 14, **caractérisé par** une commande (21) pour maintenir la distance entre deux véhicules porteurs (6.1, 6.2).

16. Dispositif de stockage selon la revendication 15, **caractérisé en ce que** la commande (21) reçoit ses données de codeurs rotatifs (22) disposés sur au moins une roue (14).

17. Dispositif de stockage selon l'une des revendications 1 à 16, **caractérisé en ce qu'**il existe au moins un transpondeur (23) pour la paire de rails (3.1, 3.2) d'un trajet de déplacement de base (3) et/ou les paires de rails (respectivement 4.1, 4.2) d'un trajet de transfert (4) afin de garantir une position exacte au niveau d'un croisement de rails.

18. Dispositif de stockage selon l'une des revendications 1 à 17, **caractérisé en ce qu'**il existe au moins deux trajets de déplacement de base parallèles (3) dans le dispositif de stockage (1).

19. Procédé pour faire fonctionner un dispositif de stockage pour des plaques de matériau (2), lequel dispositif de stockage comprenant ce qui suit :
a) au moins un trajet de déplacement de base sur rails (3) ayant au moins une paire de rails (3.1, 3.2) et au moins un trajet de transfert sur rails (4) menant jusqu'à des emplacements de dépose de plaques (7) ayant au moins deux paires de rails (4.1, 4.2), dans lequel la paire de rails du trajet de déplacement de base (3) et les paires de rails du trajet de transfert (4) se croisent pratiquement à angle droit,
b) au moins un dispositif de transport (5) constitué de deux véhicules porteurs (6.1, 6.2) ayant un entraînement propre (19, 20) qui peuvent être synchronisés l'un par rapport à l'autre à une distance constante (A1, A2) pendant le transport et qui sont capables de recevoir ensemble les plaques de matériau (2) à transporter, et
c) un dispositif de levage (25) pouvant être synchronisé de la même manière et présent sur chacun des deux véhicules porteurs (6.1, 6.2), au moyen duquel des plaques de matériau (2) peuvent être reçues et déposées dans le dispositif de stockage sur les emplacements de dépose de plaques (7),
lequel procédé étant **caractérisé en ce que**
le dispositif de transport (5) est déplacé par un dispositif d'alignement de roues (10) à la fois sur le trajet de déplacement de base (3) et sur le trajet de transfert (4), et de telle sorte que les véhicules porteurs (6.1, 6.2) sont déplacés sur le trajet de déplacement de base (3) l'un derrière l'autre à une distance constante (A1) et sur les trajets de transfert (4) parallèlement l'un à l'autre à une distance constante (A2) à la même hauteur, dans lequel les plaques de matériau à transporter maintiennent leur position sur les deux véhicules porteurs (6.1, 6.2) et ne sont pas déplacés ou décalés par rapport au dispositif de transport (5) complet.

20. Procédé selon la revendication 19, **caractérisé en ce que** la distance constante (A1) entre les deux véhicules porteurs (6.1, 6.2) sur le trajet de déplacement de base (3) correspond à la distance des au moins deux paires de rails (4.1, 4.2) sur le trajet de transfert (4), de telle sorte qu'après activation du dispositif d'alignement de roues (10), les roues actives (14) peuvent être déplacées sur les rails de transfert.

21. Procédé selon la revendication 19 ou 20, **caractérisé en ce que** le dispositif d'alignement de roues (10) est relié aux composants de châssis (11, 12) des véhicules porteurs.

22. Procédé selon l'une des revendications 19 à 21, **caractérisé en ce que** les roues (14) des véhicules porteurs (6.1, 6.2) tournent autour un axe vertical pour changer la direction de déplacement.

23. Procédé selon la revendication 22, **caractérisé en ce que** les roues (14) tournent pendant qu'elles reposent sur des disques rotatifs (17) dans la zone de croisement des rails (3.1, 3.2, 4.1, 4.2).

24. Procédé selon la revendication 22, **caractérisé en ce que** les roues (14) des véhicules porteurs (6.1, 6.2) sont montées de manière à pouvoir tourner, au moyen d'un moteur, autour d'un axe vertical et elles sont soulagées au moins pendant une courte durée au cours de la rotation par au moins un piston de pression (16) qui soulève le véhicule porteur (6.1, 6.2), jusqu'à ce qu'elles soient tournées d'environ 90°.

25. Procédé selon l'une des revendications 19 à 21, **caractérisé en ce que**, pour changer la direction de déplacement, un dispositif de levage (26) soulève les roues (14) des véhicules porteurs (6.1, 6.2) qui portent sur les rails (3.1, 3.2) du trajet de déplacement de base (3), tout en abaissant d'autres roues (14) sur les rails (4.1, 4.2) du trajet de transfert (4), ou inversement.

26. Procédé selon la revendication 25, **caractérisé en ce que** pour changer la direction de déplacement, un premier châssis (11) avec les roues pour les rails (3.1, 3.2) du trajet de déplacement de base (3) et un second châssis (12) avec les roues pour les rails (4.1, 4.2) du trajet de transfert (4) sont déplacés l'un par rapport à l'autre par le dispositif de levage (26).

27. Procédé selon l'une des revendications 25 à 26, **caractérisé en ce que** le dispositif de levage (25) et le dispositif de levage (26) sont tous deux entraînés par les mêmes actionneurs (13).

28. Procédé selon l'une des revendications 19 à 27, **caractérisé en ce que** le dispositif de levage (25) s'approche de plusieurs positions en hauteur pour la surface de support (24) du véhicule porteur (6.1, 6.2).

29. Procédé selon la revendication 28, **caractérisé en ce qu'**au moins une position en hauteur est couplée à des roues abaissées sur, et donc en contact avec, les rails (3.1, 3.2) du trajet de déplacement de base (3), et au moins une autre position en hauteur est couplée à des roues abaissées sur, et donc en contact avec, les rails (4.1, 4.2) du trajet de transfert (4).

30. Procédé selon la revendication 28 ou 29, **caractérisé en ce que**, lors du transport d'une plaque de matériau (2) sur le trajet de transfert (4), la surface de support (24) des plaques de matériau (2) à transporter se situe au-dessus de l'emplacement de dépose de plaques (7) dans le dispositif de stockage, et est abaissée à une position en hauteur située en dessous de l'emplacement de dépose de plaques (7) afin de déposer une plaque de matériau (2) sur l'emplacement de dépose de plaques (7).

31. Procédé selon l'une des revendications 19 à 30, **caractérisé en ce que** les véhicules porteurs (6.1, 6.2) sont alimentés en énergie par des boucles d'induction (9).

32. Procédé selon la revendication 31, **caractérisé en ce que** de l'énergie électrique est stockée dans des accumulateurs (18) sur les véhicules porteurs (6.1, 6.2).

33. Procédé selon l'une des revendications 19 à 30, **caractérisé en ce que** les véhicules porteurs (6.1, 6.2) sont mécaniquement découplés l'un de l'autre, au moins à l'état déchargé.

34. Procédé selon l'une des revendications 19 à 33, **caractérisé en ce que** la distance entre deux véhicules porteurs (6.1, 6.2) est maintenue par une commande commune (21) des véhicules porteurs (6.1, 6.2).

35. Procédé selon la revendication 34, **caractérisé en ce que** la commande (21) déplace les véhicules porteurs (6.1, 6.2) de manière synchronisée avec la distance à l'état chargé, et de manière synchronisée avec la distance ou indépendamment l'un de l'autre à l'état déchargé.

36. Procédé selon la revendication 34 ou 35, **caractérisé en ce que** la commande (21) reçoit ses données de codeurs rotatifs (22) disposés sur au moins une roue (14).

37. Procédé selon l'une des revendications 19 à 36, **caractérisé en ce que** la position exacte au niveau d'un croisement de rails est garantie par au moins un transpondeur (23) pour la paire de rails (3.1, 3.2) du trajet de déplacement de base (3) et/ou les paires de rails (respectivement 4.1, 4.2) du trajet de transfert (4).
